# EUROPÄISCHE PATENTSCHRIFT

(11) **EP 2 159 549 B1**
(45) Veröffentlichungstag und Bekanntmachung des Hinweises auf die Patenterteilung: **07.10.2015**
(21) Anmeldenummer: 08015103.8
(22) Anmeldetag: 27.08.2008
(51) Int. Cl.: G01D 5/245

(54) **Vorrichtung zur Messung der Relativposition zwischen einer Massverkörperung und einem Lesekopf**
Device for measuring the relative position between a material measure and a read head
Dispositif de mesure de la position relative entre une mesure matérialisée et une tête de lecture

(43) Veröffentlichungstag der Anmeldung: 03.03.2010
(73) Patentinhaber: SICK STEGMANN GmbH, 78166 Donaueschingen (DE)
(72) Erfinder: Siraky, Josef, 78166 Donaueschingen (DE)
(74) Vertreter: Westphal, Mussgnug & Partner Patentanwälte mbB

(56) Entgegenhaltungen:
- WO-A1-03/012972
- DE-A1-102005 047 009
- DE-A1-102006 017 865
- US-A- 6 002 250

## Beschreibung

Die Erfindung betrifft eine Vorrichtung zur Messung der Relativposition zwischen einer Maßverkörperung und einem Lesekopf.

Zur Messung der Relativposition zweier linear oder rotatorisch gegeneinander bewegbarer Objekte ist es bekannt, dem einen Objekt eine Maßverkörperung zuzuordnen, welche durch einen dem zweiten Objekt zugeordneten Lesekopf abgetastet wird. Bei inkrementalen Systemen weist die Maßverkörperung eine inkrementale Teilung mit äquidistanten Marken auf, die bei der Relativbewegung mittels des Lesekopfes gezählt werden. Bei absoluten Systemen weist die Maßverkörperung eine Codierung auf, die durch den Lesekopf gelesen wird und die jeweilige Position angibt. Bei den inkrementalen Systemen muss jeweils eine Ausgangsposition für die Zählung vorgegeben werden, während bei den absoluten Systemen beim Einschalten die Position durch die Codierung unmittelbar abgelesen werden kann.

Inkrementale Systeme haben den Vorteil, dass die Maßverkörperung auch mit hoher Auflösung relativ einfach hergestellt werden kann. Die Auflösung kann weiter dadurch verbessert werden, dass die bei der Abtastung der periodischen Teilung in der Regel entstehenden sinusförmigen Signale noch interpoliert werden, wodurch die Auflösung um bis zu 2 oder 3 Größenordnungen verbessert werden kann.

Um den Nachteil der fehlenden Absolutpositionen bei dem inkrementalen System zu beseitigen, ist es aus der DE 10 2005 047 009 A1 bekannt, zwischen den in Messrichtung aufeinander folgenden Marken der inkrementalen Teilung Permanentmagnete anzuordnen, die quer zur Messrichtung polarisiert sind. Durch die entgegengesetzte Anordnung von Nord- und Südpol der Permanentmagnete kann jeweils eine binäre 1-Bit-Information erzeugt werden. Durch mehrere in Messrichtung aufeinander folgende Magnete kann auf diese Weise die Absolutposition als Mehr-Bit-Wort codiert aufgebracht werden. Diese Absolutcodierung macht die Maßverkörperung aufwändig und steht einer inkrementalen Teilung mit hoher Auflösung entgegen.

Bei absoluten Systemen ist der Messbereich insbesondere bei linearen Meßsystemen begrenzt. Je größer die Messstrecke wird, umso mehr Code-Spuren werden benötigt, um die Absolutposition mit einer ausreichenden Auflösung zu codieren. Diesem Nachteil wird gemäß DE 10 2006 017 865 A1 dadurch begegnet, dass die Maßverkörperung in Messrichtung in einzelne Segmente, d.h. in lückenlos aufeinander folgende Teilabschnitte unterteilt wird. Jedes Segment ist in übereinstimmender Weise absolut codiert. Da sich die absolute Codierung auf die Länge der Segmente beschränkt, kann mit wenigen Bit eine ausreichende Auflösung erhalten werden. Den einzelnen Segmenten sind jeweils permanentmagnetische Markierungen zugeordnet, die bei der Relativbewegung durch den Lesekopf erfasst werden und Zählimpulse erzeugen, die inkremental je nach Bewegungsrichtung aufwärts oder abwärts gezählt werden. Der jeweilige Zählerstand ist somit dem Segment der jeweils aktuellen Position zugeordnet. Der Zählerstand wird unverlierbar gespeichert, so dass die absolute Position auch nach einer Betriebsunterbrechung zur Verfügung steht. Um den Speicher von externen Energiequellen unabhängig zu machen, können Batterien verwendet werden. In der DE 10 2006 017 865 A1 ist weiter angegeben, dass der Lesekopf mit einer Wieganddraht-Einrichtung ausgebildet ist, die einerseits die permanentmagnetischen Markierungen erfasst und andererseits mittels ihrer Impulsenergie die Zählerschaltung speist.

Aus der WO 03/012972 A1 ist eine Messvorrichtung bekannt, bei welcher Permanentmagnete in einer inkrementalen Teilung angeordnet sind. Die Teilung wird durch einen Lesekopf mit Magnetfeldsensoren abgetastet, die die Magnetfeldstärke zwischen den jeweils aufeinanderfolgenden Permanentmagneten messen, um den Teilungsabstand zwischen den aufeinanderfolgenden Permanentmagneten zu interpolieren. Aus der US 6,002,250 A ist es bekannt, eine inkrementale Teilung induktiv abzutasten, wobei die Abtastsignale zur Interpolation der Teilungsschritte ausgewertet werden.

Der Erfindung liegt die Aufgabe zugrunde, eine Vorrichtung zur Messung der Relativposition zur Verfügung zu stellen, die in kostengünstiger Weise eine hohe Auflösung ermöglicht und praktisch keine Einschränkungen bezüglich der Messstrecke aufweist.

Die Aufgabe wird erfindungsgemäß gelöst durch eine Vorrichtung mit den Merkmalen des Patentanspruchs 1.

Vorteilhafte Ausführungen der Erfindung sind in den Unteransprüchen angegeben.

Die erfindungsgemäße Vorrichtung zur Messung der Relativposition zwischen einer Maßverkörperung und einem Lesekopf weist eine Maßverkörperung und einen Lesekopf auf. Die Maßverkörperung wird einem Objekt fest zugeordnet, während der Lesekopf einem zweiten Objekt fest zugeordnet wird, welches gegenüber dem ersten Objekt relativ bewegbar ist. Die Relativbewegung kann eine lineare Bewegung oder eine rotatorische Bewegung sein. Dementsprechend ist die Maßverkörperung linear oder kreisförmig ausgebildet.

Die Maßverkörperung weist eine inkrementale Teilung auf, die in an sich bekannter Weise ausgebildet sein kann. Der Lesekopf weist eine der inkrementalen Teilung entsprechende Abtastung auf, die ebenfalls in an sich bekannter Weise ausgebildet sein kann. Bei der Relativbewegung von Maßverkörperung und Lesekopf erzeugt die Abtastung der inkrementalen Teilung in der Regel etwa sinusförmige Signale, die eine nochmalige Interpolation der Teilungsschritte der inkrementalen Teilung in einer nachgeschalteten elektronischen Auswertung ermöglichen. Die inkrementale Teilung kann eine optisch abgetastete Teilung sein, die eine besonders hohe Auflösung ermöglicht, jedoch mechanisch empfindlich ist. Die inkrementale Teilung kann weiter eine kapazitive Abtastung sein, die zwar nicht mit ganz so hoher Auflösung realisiert werden kann, jedoch äußerst robust ist. Ebenso kann die inkrementale Teilung induktiv abgetastet werden, z.B. nach dem Wirbelstromprinzip, was ebenfalls eine robuste Ausführung und insbesondere eine Ausführung mit hoher Schutzklasse (IP 69 K) ermöglicht. Alle diese Teilungen und deren Abtastung sind an sich bekannter Stand der Technik. Erfindungsgemäß ist lediglich eine magnetische Ausführung der inkrementalen Teile ausgeschlossen.

Weiter weist die Maßverkörperung Permanentmagnete auf, die in Messrichtung, d.h. in der Richtung der Relativbewegung, äquidistant angeordnet sind. Die Permanentmagnete definieren lückenlos aneinander anschließende Segmente bzw. Teilabschnitte der inkrementalen Teilung. Das von den jeweils in Messrichtung aufeinander folgenden Permanentmagneten erzeugte Magnetfeld wird durch wenigstens einen Magnetsensor des Lesekopfes erfasst. Dieser Magnetsensor ermittelt in an sich bekannter Weise, wie dies z.B. in der DE 32 44 891 C2 beschrieben ist, die jeweilige Größe des Magnetfeldes in der aktuellen Position des Lesekopfes. Diese Größe des Magnetfeldes ist eindeutig einem Teilungsschritt der inkrementalen Teilung innerhalb des Segmentes zugeordnet.

Schließlich ist der Lesekopf noch mit einer Wieganddraht-Einrichtung (Impulsdraht-Einrichtung) ausgestattet. Diese Wieganddraht-Einrichtung erzeugt beim Überfahren der Permanentmagnete jeweils Segmentzählimpulse, die in einem zugeordneten Zähler je nach Bewegungsrichtung aufwärts oder abwärts gezählt werden. Der Zählerstand gibt somit das Segment der Maßverkörperung an, in welchem sich der Lesekopf ausgehend von einer ursprünglichen Nullposition aktuell befindet. Der Zähler speichert den jeweiligen Zählerstand unverlierbar, so dass auch bei einer Betriebsunterbrechung der jeweilige Zählerstand und damit die absolute Position des Segments, in welchem sich der Lesekopf aktuell befindet, erhalten bleibt. Um die Speicherschaltung von äußeren Energiequellen unabhängig zu machen, was für eine unverlierbare Speicherung wichtig ist, kann die Zählerschaltung mit dem Speicher durch eine Batterie gespeist werden. Vorteilhaft ist es, wenn die Energie der Zählimpulse der Wieganddraht-Einrichtung zur Speisung der Zählerschaltung und des Speichers genutzt wird, wie dies ebenfalls in der DE 10 2006 017 865 A1 beschrieben ist. Die Messvorrichtung ist dann auch von einer Batterie-Lebensdauer unabhängig. Die Zählung der Segmentzählimpulse in dem von einer äußeren Energiequelle unabhängigen Zähler hat weiter den Vorteil, dass auch Relativbewegungen erfasst werden, die im spannungslosen Zustand der Vorrichtung erfolgen, z.B. ein manuelles Verfahren bei abgeschalteter oder ausgefallener Stromversorgung.

Die erfindungsgemäße Vorrichtung weist wesentliche Vorteile auf:
Die Messstrecke der Relativbewegung ist praktisch unbeschränkt. Bei einer linearen Vorrichtung können somit auch sehr große Längen gemessen werden. Bei rotatorischen Systemen kann die Messung über viele Umdrehungen erfolgen. Der Aufwand der Messvorrichtung ist weitgehend von der Länge der Messstrecke unabhängig, so dass die Vorrichtung insbesondere bei großen Messstrecken äußerst kostengünstig ist.

Die Auflösung der Messvorrichtung ist durch die inkrementale Teilung und deren Interpolation bestimmt, so dass unabhängig von der Länge der Messstrecke die hohe Auflösung bekannter Vorrichtungen erreicht werden kann.

Die aktuelle Position kann absolut ermittelt werden, indem einerseits die Segmente gezählt und der Zählerstand unverlierbar gespeichert wird und andererseits die Position des Lesekopfes innerhalb eines Segmentes über die Magnetsensoren absolut einem Teilungsschritt der inkrementalen Teilung zugeordnet werden kann.

Während der Positionsmessung zählt die Zähleinrichtung mittels der von der Wieganddraht-Einrichtung erzeugten Segmentzählimpulse die von dem Lesekopf in Vorwärts- bzw. Rückwärtsrichtung überfahrenen Permanentmagnete und speichert unverlierbar den Zählerstand. Dieser Zählerstand gibt somit ausgehend von einem anfangs vorgegebenen Nullpunkt jederzeit, d.h. insbesondere auch nach einer Betriebsunterbrechung und gegebenenfalls einem Verfahren in dieser spannungslosen Zeit, absolut an, in welchem Segment sich der Lesekopf befindet. Die Länge der Messstrecke, d.h. die Anzahl der Segmente, unterliegt dabei praktisch keiner Beschränkung. Innerhalb des jeweiligen Segmentes gibt die Abtastung des Magnetfeldes der Permanentmagnete durch die Magnetsensoren des Lesekopfes eine absolute Positionsangabe, innerhalb welchen Teilungsschrittes der inkrementalen Teilung innerhalb des jeweiligen Segmentes sich der Lesekopf befindet. Auch diese Positionsinformation steht beim Einschalten der Vorrichtung absolut zur Verfügung. Innerhalb des Teilungsschrittes wird die Position nochmals durch Interpolation der Abtastsignale mit einer höheren Auflösung gemessen.

Die erfindungsgemäße Vorrichtung vereinigt somit die Vorteile der mit relativ einfachen Mitteln erreichbaren hohen Auflösung einer inkrementalen Teilung mit den Vorteilen einer absoluten Positionsbestimmung, ohne dass der Messbereich aufgrund der Kosten oder der Konstruktion einer Beschränkung unterliegt.

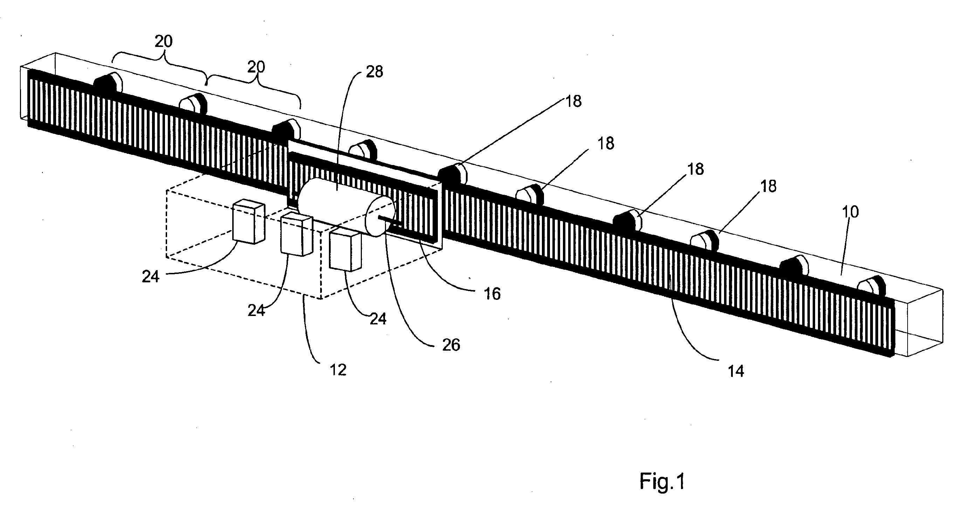

Im Folgenden wird die Erfindung anhand eines in der Zeichnung dargestellten Ausführungsbeispiels näher erläutert. Es zeigen
- Figur 1: schematisch eine Ansicht der Vorrichtung und
- Figur 2: eine schematische Draufsicht auf die Vorrichtung.

In der Zeichnung ist die Erfindung in einer Ausführung als lineare Messvorrichtung dargestellt. Eine analoge Ausbildung als rotatorisches Messsystem ergibt sich für den Fachmann in selbstverständlicher Weise.

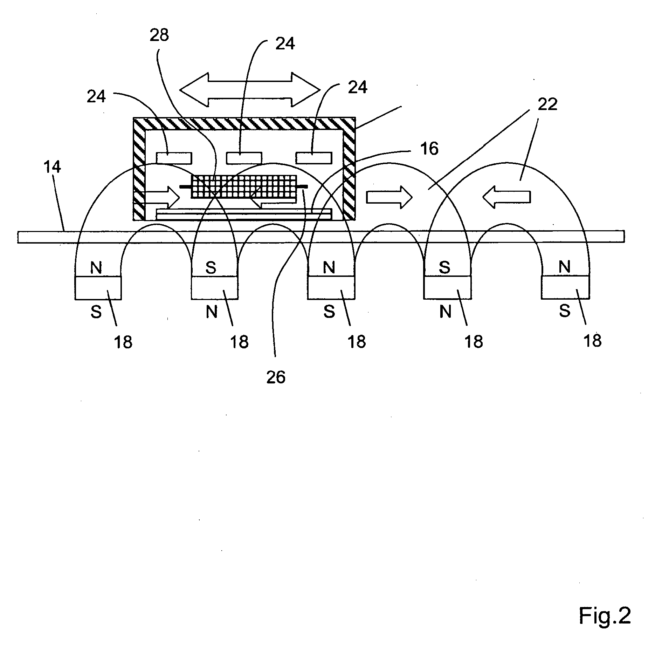

Die Vorrichtung besteht aus einer Maßverkörperung 10 und einem Lesekopf 12. In der Zeichnung sind die Maßverkörperung 10 und der Lesekopf 12 jeweils schematisch durch ein Gehäuse dargestellt. Die Maßverkörperung 10 ist in der Zeichnung in einem Abschnitt begrenzter linearer Ausdehnung dargestellt. Wie vorstehend erläutert kann die Maßverkörperung 10 eine praktisch unbegrenzte Länge aufweisen. Die Maßverkörperung 10 ist mit einem Objekt fest verbunden, während der Lesekopf 12 mit einem zweiten Objekt fest verbunden ist. Die beiden Objekte sind gegeneinander bewegbar, insbesondere in Längsrichtung der Maßverkörperung 10 gegeneinander bewegbar, wie dies in Figur 2 durch einen Doppelpfeil angedeutet ist.

Die Maßverkörperung 10 weist eine inkrementale Teilung 14 auf, die sich über die gesamte Länge der Maßverkörperung 10 in der Messrichtung, d.h. der Bewegungsrichtung erstreckt. Die inkrementale Teilung 14 wird durch eine Abtastung 16 des Lesekopfes 12 abgetastet. Die inkrementale Teilung 14 und die Abtastung 16 können in an sich bekannter Weise optisch, induktiv oder kapazitiv ausgebildet sein. Ausgeschlossen ist lediglich eine magnetische Ausbildung der inkrementalen Teilung 14. Die Abtastung 16 erzeugt bei der Bewegung über die inkrementale Teilung 14 in an sich bekannter Weise Abtastsignale, die im Wesentlichen einen sinusförmigen Verlauf haben. Die Sinusform der Abtastsignale ermöglicht in an sich bekannter Weise eine Interpolation des Teilungsabstandes der inkrementalen Teilung 14, so dass die Auflösung nochmals gegenüber der Auflösung der Teilung 14 um mehr als einen Faktor 1000 (bis zu 14 bit) in der Größenordnung verbessert werden kann.

Weiter weist die Maßverkörperung 10 Permanentmagnete 18 auf, die in Messrichtung, d.h. in Längsrichtung der Maßverkörperung 10 in äquidistanten Abständen angeordnet sind. Die Permanentmagnete 18 sind dabei so angeordnet, dass sie jeweils alternierend mit ihrem Nordpol oder Südpol dem Lesekopf 12 zugewandt sind. In der Zeichnung sind die Permanentmagnete 18 auf der von dem Lesekopf 12 abgewandten Seite der Maßverkörperung 10 angeordnet. Andere Anordnungen sind ebenfalls möglich. Durch die Permanentmagnete 18 wird die inkrementale Teilung 14 in Segmente 20, d.h. in Teilabschnitte unterteilt. Jedes Segment 20 erstreckt sich jeweils von einem Permanentmagneten 18 bis zu dem in Messrichtung nächsten Permanentmagneten 18. Die Segmente 20 schließen lückenlos aneinander an und umfassen mehrere Teilungsschritte der inkrementalen Teilung 14. Die Permanentmagnete 18 erzeugen ein Magnetfeld 22, dessen Feldlinien jeweils von einem Permanentmagneten 18 zu dem folgenden Permanentmagneten 18 verlaufen, wie in Figur 2 durch Pfeile angedeutet ist. Die Feldlinien der Magnetfelder 22 verlaufen somit mit sich ändernder Feldstärke über die Länge der Segmente 20.

In dem Lesekopf 12 ist wenigstens ein Magnetsensor 24 angeordnet, im dargestellten Ausführungsbeispiel sind drei Magnetsensoren 24 in Messrichtung beabstandet angeordnet. Das Magnetfeld 22 der Permanentmagnete 18 durchsetzt die nicht magnetische inkrementale Teilung 14 und den Lesekopf 12. Die Magnetsensoren 24 erfassen jeweils die magnetische Feldstärke dieser Magnetfelder 22. Da sich die magnetische Feldstärke über die Länge des Segmentes ändert, kann mittels der Magnetsensoren 24 die Position des Lesekopfes 12 innerhalb der Länge des jeweiligen Segmentes 20 bestimmt werden. Die Magnetsensoren 24 können beispielsweise magnetoresistive Sensoren sein, wie dies z.B. in DE 32 44 891 C2 beschrieben ist. Die Länge der Segmente 20, die Anzahl der Teilungsschritte der inkrementalen Teilung 14 innerhalb der Segmente 20 und die Magnetsensoren 24 sind so dimensioniert, dass durch die Messung der magnetischen Feldstärke mittels der Magnetsensoren 24 die aktuelle Position des Lesekopfes 12 einem bestimmten Teilungsschritt der inkrementalen Teilung 14 eindeutig zugeordnet werden kann. Um eine eindeutige Zuordnung der Position des Lesekopfes 12 zu einem der Segmente 20 zu gewährleisten, entspricht der Abstand der Permanentmagnete 18 mindestens der Länge des Lesekopfes 12.

Schließlich ist in dem Lesekopf 12 noch eine Wieganddraht-Einrichtung angeordnet, die aus einem Wieganddraht 26 (Impulsdraht) besteht, der in der Messrichtung, d.h. in der Richtung der Relativbewegung ausgerichtet ist und mit einer Spule 28 umwickelt ist. Wenn der Lesekopf 12 bei der Relativbewegung von Lesekopf 12 und Maßverkörperung 10 über einen der Permanentmagnete 18 hinwegfährt, wird in dem Wieganddraht 26 ein elektrischer Impuls ausgelöst, dessen Polarität von der Bewegungsrichtung des Lesekopfes 12 gegenüber der Maßverkörperung 10 abhängt. Diese Spannungsimpulse werden als Segmentzählimpulse einer nicht dargestellten elektronischen Zählschaltung zugeführt, die diese Segmentzählimpulse je nach Bewegungsrichtung aufwärts oder abwärts zählt. Der jeweilige Zählerstand wird in einem Speicher der elektronischen Auswertung unverlierbar gespeichert. Zur Speisung der Zählerschaltung und zur unverlierbaren Speicherung wird die geschwindigkeitsunabhängige Energie der Impulse des Wieganddrahtes 26 gespeichert, so dass der Lesekopf 12 mit der elektronischen Auswertung energieautark und von externen Energiequellen unabhängig ist.

Der Messvorrichtung wird einmalig eine Nullposition des Lesekopfes 12 gegenüber der Maßverkörperung 10 eingegeben. Bewegt sich der Lesekopf 12 relativ zu der Maßverkörperung 10, so werden die von dem Lesekopf überfahrenen Segmente 20 durch die Wieganddraht-Einrichtung 26, 28 je nach Bewegungsrichtung aufwärts und abwärts gezählt. Der aktuelle Zählerstand wird unverlierbar abgespeichert. Der abgespeicherte Zählerstand gibt somit jederzeit, auch bei Wiedereinschalten nach einer Betriebsunterbrechung und gegebenenfalls einer Bewegung der Messvorrichtung während dieser Zeit, absolut an, vor welchem Segment 20 sich der Lesekopf 12 befindet. Die Messung des Magnetfeldes 22 durch die Magnetsensoren 24 gibt weiter absolut an, vor welchem Teilungsschritt der inkrementalen Teilung 14 innerhalb des angezeigten Segmentes 20 sich der Lesekopf 12 befindet. Innerhalb dieses Teilungsschrittes kann nun die Abtastung 16 nochmals mit hoher Auflösung die exakte Position interpolieren.

### Bezugszeichenliste

- 10: Maßverkörperung
- 12: Lesekopf
- 14: inkrementale Teilung
- 16: Abtastung
- 18: Permanentmagnete
- 20: Segmente
- 22: Magnetfeld
- 24: Magnetsensor
- 26: Wieganddraht
- 28: Spule

## Patentansprüche

1. Vorrichtung zur Messung der Relativposition zwischen einer Maßverkörperung (10) und einem Lesekopf (12), umfassend
- eine Maßverkörperung (10) welche eine Teilung (14) aufweist,
- einen Lesekopt (12) der die Teilung (14) nichtmagnetisch mit hoher Auflösung abtastet, wobei die Maßverkörperung (10) in Messrichtung äquidistant angeordnete Permanentmagnete (18) aufweist, die lückenlos aneinander anschließende Segmente (20) der Teilung (14) festlegen, und bei welcher eine Wieganddraht-Einrichtung (26, 28) des Lesekopfes (12) beim Überfahren der Permanentmagnete (18) Segmentzählimpulse erzeugt, die unverlierbar in einem Speicher gezählt werden,
**dadurch gekennzeichnet, dass** die Teilung (14) eine inkrementale Teilung ist, dass die Segmente (20) mehrere Tellungsachritte der inkrementalen Teilung (14) umfassen, dass das von jeweils aufeinander folgenden Permanentmagneten (18) erzeugte Magnetfeld (22) durch wenigstens einen Magnetsensor (24) des Lesekopfes (12) erfasst wird, dass durch die Größe des erfassten Magnetfeldes (22) die Position des Lesekopfes (12) jeweils einem Teilungsschritt der inkrementalen Teilung (14) innerhalb des durch diese Permanentmagnete (18) festgelegten Segmentes (20) zugeordnet wird und dass die Signale der Abtastung (16) der inkrementalen Teilung (14) zur Interpolation der Teilungsschritte ausgewertet werden.

2. Vorrichtung nach Anspruch 1, bei welcher die inkrementale Teilung (14) optisch oder kapazitiv oder induktiv abgetastet wird.

3. Vorrichtung nach Anspruch 1 oder 2, bei welcher die Magnetsensoren (24) magnetoresistive Sensoren sind.

4. Vorrichtung nach Anspruch 1, bei welcher der Speicher die Segmentzählimpulse je nach Richtung der Relativbewegung aufwärts oder abwärts zählt.

5. Vorrichtung nach Anspruch 1, bei welcher die Zählschaltung und der Speicher von äußeren Energiequellen unabhängig sind.

6. Vorrichtung nach Anspruch 5, bei welcher die Zählschaltung und der Speicher durch eine Batterie gespeist werden.

7. Vorrichtung nach Anspruch 5, bei welcher die Zählschaltung und der Speicher durch die Energie der Segmentzählimpulse gespeist werden.

8. Vorrichtung nach einem der vorhergehenden Ansprüche, bei welcher die Permanentmagnete (18) mit wechselnder Polung aufeinander folgen.

9. Vorrichtung nach einem der vorhergehenden Ansprüche, bei welcher der Abstand der Permanentmagnete (18) in Messrichtung mindestens gleich der Länge des Lesekopfes (12) in Messrichtung ist.

## Claims

1. A device for measuring the relative position between a measuring scale (10) and a reading head (12) comprising
- a measuring scale (10) having an indexing (14),
- a read head (12) which scans the indexing (14) in a nonmagnetic way at a high resolution, the measuring scale (10) comprises in the measuring direction equidistantly arranged permanent magnets (18) which define mutually adjacent segments (20) of the indexing (14), and wherein a Wiegand wire means (26, 28) of the reading head (12) generates segment count pulses when passing over the permanent magnets (18), the segment counts are non-losable counted in a memory,
**characterized**
**in that** the indexing (14) is an incremental indexing,
**in that** the segments (20) comprise a plurality of indexing steps of the incremental indexing (14),
**in that** the magnetic field (22) generated by each successive permanent magnet (18) is detected by at least one magnetic sensor (24) of the reading head (12),
**in that** the position of the read head (12) is associated with a respective indexing step of the incremental indexing (14) within the segment (20) fixed by these permanent magnets (18) by the magnitude of the detected magnetic field (22) and
**in that** the signals of the sampling (16) of the incremental indexing (14) are evaluated for interpolation of the indexing steps.

2. Device according to claim 1, wherein said incremental indexing (14) is capacitively or inductively or optically scanned.

3. Device according to claim 1 or 2, wherein the magnetic sensors (24) are magnetoresistive sensors.

4. Device according to claim 1, wherein the memory counts the segment count pules upwardly or downwardly depending on the direction of relative movement.

5. Device according to claim 1, wherein the counting circuit and the memory are independent of external power sources.

6. Device according to claim 5, wherein the counter circuit and the memory are powered by a battery.

7. Device according to claim 5, wherein the counter circuit and the memory are powered by the energy of the segment count pulses.

8. Device according to one of the preceding claims, in which the permanent magnets (18) with alternating polarity follow one after the other.

9. Device according to one of the preceding claims, in which the distance of the permanent magnets (18) in the measuring direction is at least equal to the length of the read head (12) in the measuring direction.

## Revendications

1. Dispositif pour mesurer la position relative entre l'échelle de mesure (10) et une tête de lecture (12) comprenant
- une échelle de mesure (10) ayant un encliquetage (14),
- une tête de lecture (12) qui balaye l'indexation (14) d'une manière non-magnétique à haute résolution, l'échelle de mesure (10) comprend dans la direction de mesure des aimants de façon équidistante disposés permanents (18) qui définissent des segments adjacents (20) de la indexation (14), et dans lequel un moyen de fil de Wiegand (26, 28) de la tête de lecture (12) génère des segments d'impulsions de comptage lors du passage sur les aimants permanents (18), les chiffres de segment sont imperdable comptés dans un mémoire,
**caractérisé**
**en ce que** l'encliquetage (14) est un indexage incrémental, en ce que les segments (20) comprennent une pluralité d'étapes d'indexation de l'indexation incrémentale (14),
**en ce que** le champ magnétique (22) généré par chaque aimant permanent successif (18) est détecté par au moins un capteur magnétique (24) de la tête de lecture (12),
**en ce que** la position de la tête de lecture (12) est associée à une étape respective d'indexation de l'indexation incrémentale (14) dans le segment (20) fixé par ces aimants permanents (18) par la grandeur du champ magnétique détecté (22) et
**en ce que** les signaux de l'échantillonnage (16) de l'indexage incrémental (14) sont évalués pour l'interpolation des étapes d'indexation.

2. Dispositif selon la revendication 1, dans lequel ledit indexage incrémental (14) est de manière capacitive ou inductive ou optique numérisé.

3. Dispositif selon la revendication 1 ou 2, dans lequel les capteurs magnétiques (24) sont des capteurs magnétorésistifs.

4. Dispositif selon la revendication 1, dans lequel la mémoire compte les pulses de comptage de segment vers le haut ou vers le bas en fonction de la direction du mouvement relatif.

5. Dispositif selon la revendication 1, dans lequel le circuit de comptage et la mémoire sont indépendants des sources d'énergie externes.

6. Dispositif selon la revendication 5, dans lequel le circuit de comptage et la mémoire sont alimentés par une batterie.

7. Dispositif selon la revendication 5, dans lequel le circuit de comptage et la mémoire sont alimentés par l'énergie des impulsions de comptage du segment.

8. Dispositif selon l'une quelconque des revendications précédentes, dans lequel les aimants permanents (18) avec polarité alternée suivent l'un après l'autre.

9. Dispositif selon l'une quelconque des revendications précédentes, dans lequel la distance entre les aimants permanents (18) dans la direction de mesure est au moins égale à la longueur de la tête de lecture (12) dans la direction de mesure.
